# EUROPEAN PATENT APPLICATION

(11) **EP 4 549 244 A2**
(43) Date of publication of application: **07.05.2025**
(21) Application number: 24209538.8
(22) Date of filing: 29.10.2024
(51) Int. Cl.: B60P 1/48, B60F 3/00, B60P 1/64

(54) **OFFROAD UTILITY VEHICLE WITH DEMOUNTABLE PLATFORM**

(30) Priority: 30.10.2023 US 202363594412 P
(71) Applicant: RufDiamond Ltd., Coniston, ON P0M 1M0 (CA)
(72) Inventor: ADAMS, Daryl, Coniston, Ontario P0M 1M0 (CA)
(74) Representative: Locas, Davide

(57) **Abstract**

An offroad utility vehicle comprises a carrier deck, a demountable platform that is movable between a mounted position in which the demountable platform is carried by the carrier deck and a demounted position in which the demountable platform is deployed onto the ground. The offroad utility vehicle includes a hook and lift mechanism for moving the platform between the mounted and demounted positions. The hook and lift mechanism comprises a hook for hooking onto the demountable platform. The hook and lift mechanism comprises a power lift mechanism that includes an actuator and a rotatable frame for rotating the demountable platform into an inclined posture relative to the carrier deck. Alternatively, a drop-leg mechanism may be used to deploy the demountable platform.

## Description

### TECHNICAL FIELD

The present invention relates generally to offroad utility vehicles and, more particularly, to offroad utility vehicles having a deck or platform for carrying or transporting objects.

### BACKGROUND

Offroad utility vehicles, whether wheeled or tracked, are used to transport persons and/or equipment to remote locations where there are no available roads. The ability to traverse rough terrain is useful in many applications such as disaster relief, military operations, maintenance of power grid infrastructure, forest firefighting, to name but a few. In many instances, the vehicle must also be able to traverse bodies of water, swamps or marshland in order to reach a remote destination. A recurring challenge, once the vehicle has reached the remote destination, is to offload the cargo carried by the vehicle, especially in situations where the cargo is very heavy. A technical solution to this issue remains highly desirable.

### SUMMARY

The following presents a simplified summary of some aspects or embodiments of the invention in order to provide a basic understanding of the invention. This summary is not an extensive overview of the invention. It is not intended to identify key or critical elements of the invention or to delineate the scope of the invention. Its sole purpose is to present some embodiments of the invention in a simplified form as a prelude to the more detailed description that is presented later.

Broadly stated, the present specification discloses an offroad utility vehicle having a demountable platform that can be deployed (demounted) from the offroad utility vehicle. Two embodiments of the invention are disclosed, i.e. a first embodiment involving a hook and lift mechanism and a second embodiment involving a drop-leg mechanism.

Accordingly, one main inventive aspect of the present specification is an offroad utility vehicle that includes a carrier deck, a demountable platform that is movable between a mounted position in which the demountable platform is carried by the carrier deck and a demounted position in which the demountable platform is deployed onto the ground and a hook and lift mechanism for moving the platform between the mounted and demounted positions. The hook and lift mechanism comprises a hook for hooking onto the demountable platform. The hook and lift mechanism comprises a power lift mechanism that includes an actuator and a rotatable frame for rotating the demountable platform into an inclined posture relative to the carrier deck.

In some embodiments, the offroad utility vehicle comprises a carrier deck, a demountable platform that is movable between a mounted position in which the demountable platform is carried by the carrier deck and a demounted position in which the demountable platform is deployed onto the ground and a hook and lift mechanism for moving the demountable platform between the mounted and demounted positions, wherein the hook and lift mechanism comprises a hook for hooking onto the demountable platform, wherein the hook and lift mechanism comprises a power lift mechanism that includes an actuator and a rotatable frame comprising a first beam and a second beam orthogonal to the first beam, the first beam supporting the hook, the second beam configured to move inside a rotatable channel for both sliding and rotating the demountable platform into an inclined posture relative to the carrier deck.

Another main inventive aspect of the present specification is an offroad utility vehicle comprising a carrier deck, a demountable platform that is movable between a mounted position in which the demountable platform is carried by the carrier deck and a demounted position in which the demountable platform is deployed onto the ground and a drop-leg mechanism connected to the demountable platform, wherein the demountable platform comprises a plurality of legs that are movable between a raised position in which the legs are raised above the ground and a lowered position in which the legs are lowered onto the ground.

In some embodiments, the offroad utility vehicle comprises a vehicle-mounted roller extending rearwardly behind the carrier deck and the demountable platform also comprises a platform roller at a rear end of the demountable platform.

In some embodiments, the offroad utility vehicle comprises a first linkage connected to the actuator to slide the demountable platform and a second linkage, angled relative to the first linkage, to currently rotate the demountable platform.

In some embodiments, the offroad utility vehicle comprises a platform self-leveling controller for controlling self-leveling of the demountable platform and a platform inclination sensor for sensing an angle of inclination of the demountable platform and for providing the inclination to the platform self-leveling controller.

In some embodiments, the offroad utility vehicle comprises a GNSS receiver for generating location coordinates of the demountable platform and a satellite and/or cellular transceiver for transmitting the location coordinates of the demountable platform.

In some embodiments, the offroad utility vehicle comprises a main vehicle unit having at least four inflatable tires and a rear wagon coupled to the main vehicle unit.

In some embodiments, the rear wagon comprises the carrier deck and also has at least four inflatable tires, the inflatable tires of the main vehicle and rear wagon being of sufficient volume to enable the offroad utility vehicle to float on water,

### BRIEF DESCRIPTION OF THE DRAWINGS

These and other features of the disclosure will become more apparent from the description in which reference is made to the following appended drawings.
FIG. 1 depicts a rear wagon of an offroad utility vehicle having a hook and lift mechanism in accordance with an embodiment of the present invention.
FIG. 1A depicts the hook and lift mechanism of the offroad utility vehicle in operation.
FIG. 1B depicts the internal components of the hook and lift mechanism.
FIG. 2 depicts a rear wagon of an offroad utility vehicle having a drop-leg mechanism in accordance with another embodiment of the present invention.
FIG. 3 further depicts the rear wagon and drop-leg mechanism of FIG. 2.
FIG. 4 depicts a demountable platform for the offroad utility vehicle.
FIG. 5 is a rear perspective view of an offroad utility vehicle having a rear wagon and a demountable platform.
FIG. 6 is another rear perspective view of an offroad utility vehicle having a rear wagon and a demountable platform.
FIG. 7 is a front perspective view of the offroad utility vehicle and the demountable platform.
FIG. 8 is a rear perspective view of the offroad utility vehicle after deployment of the demountable platform.
FIG. 9 is a perspective view of the demountable platform in an elevated posture.
FIG. 10 is another perspective view of the demountable platform in an elevated posture.
FIG. 11 is a perspective view of the demountable platform in a lowered posture.
FIG. 12 is a perspective view of the demountable platform in a lowered posture.
FIG. 13 is a rear view of the demountable platform being carried by the rear wagon of the offroad utility vehicle.
FIG. 14 is a side view of the demountable platform being carried by the rear wagon of the offroad utility vehicle.

### DETAILED DESCRIPTION OF EMBODIMENTS

The following detailed description contains, for the purposes of explanation, numerous specific embodiments, implementations, examples and details in order to provide a thorough understanding of the invention. It is apparent, however, that the embodiments may be practiced without these specific details or with an equivalent arrangement. In other instances, some well-known structures and devices are shown in block diagram form in order to avoid unnecessarily obscuring the embodiments of the invention. The description should in no way be limited to the illustrative implementations, drawings, and techniques illustrated below, including the exemplary designs and implementations illustrated and described herein, but may be modified within the scope of the appended claims along with their full scope of equivalents.

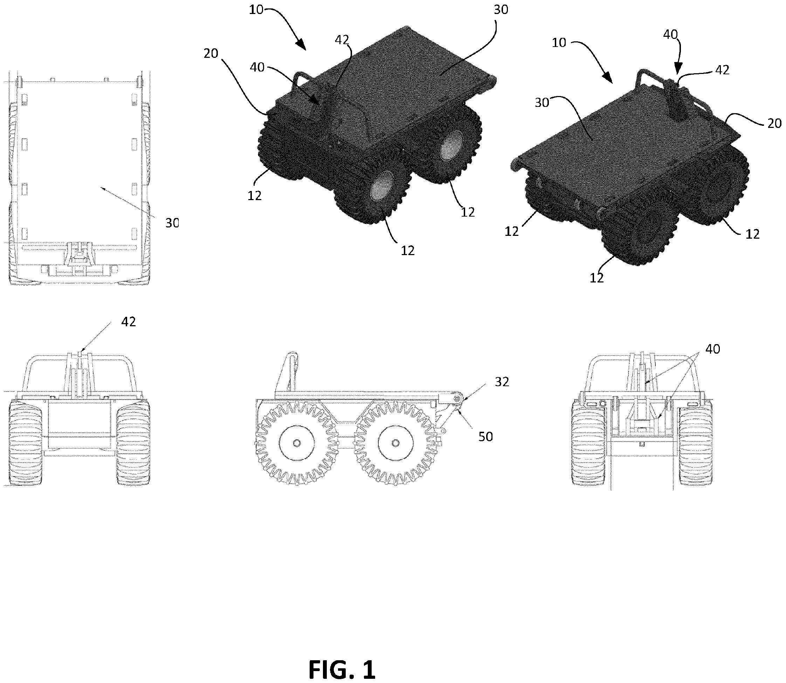

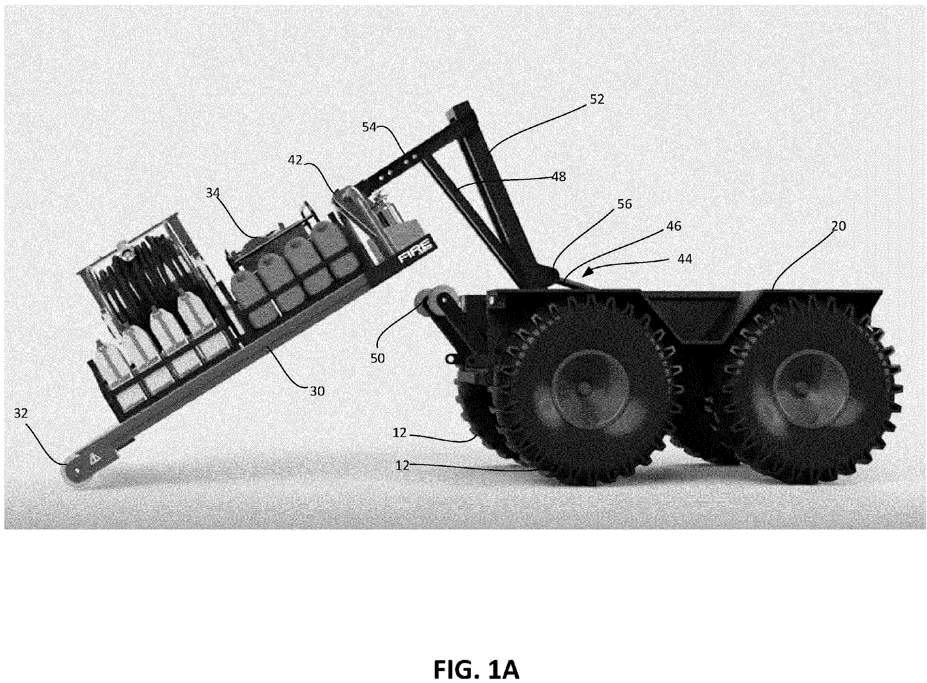

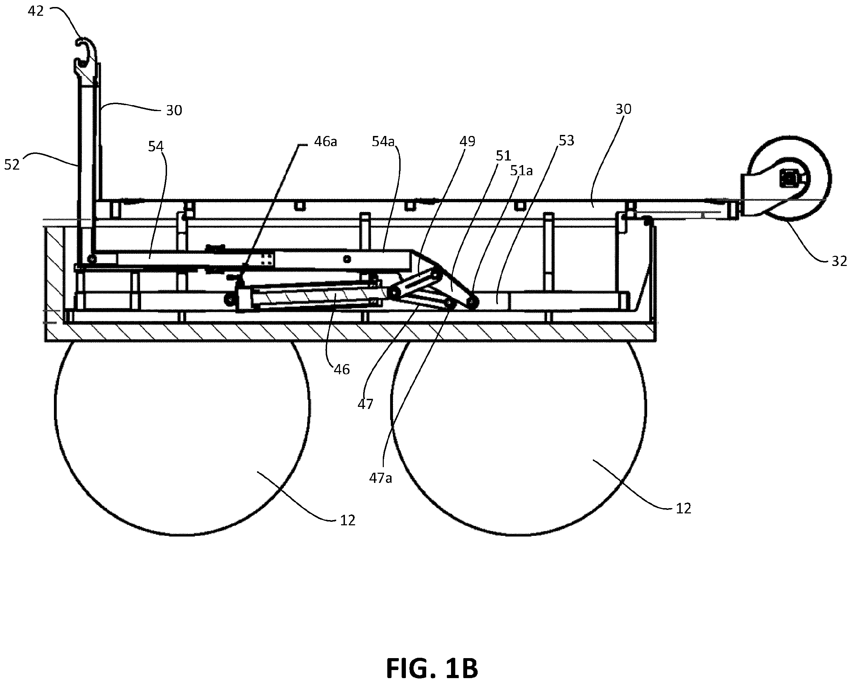

FIG. 1 depicts a rear wagon 10 of an offroad utility vehicle having a carrier deck 20, a demountable platform 30, and a hook and lift mechanism 40 in accordance with an embodiment of the present invention. FIG. 1A depicts the hook and lift mechanism 40 of the offroad utility vehicle in operation. The offroad utility vehicle comprises a carrier deck 20 (or flatbed) which in some embodiments is on the rear wagon 10 of the offroad utility vehicle. As shown by way of example in FIG. 1 and FIG. 1A, the offroad utility vehicle includes a demountable platform 30 that is movable between a mounted position in which the demountable platform is carried by the carrier deck 20 and a demounted position in which the demountable platform is deployed onto the ground. As shown in the illustrated embodiments, the carrier deck is parallel to the ground, e.g. horizontal when the vehicle is on a horizontal ground surface. When mounted on the carrier deck, the platform is thus also parallel to the ground, e.g. also horizontal when the vehicle is on a horizontal ground surface. The offroad utility vehicle includes, in some embodiments, a hook and lift mechanism 40 for moving the demountable platform 30 between the mounted and demounted positions. In some embodiments, as the one illustrated in FIGS. 1 and 1A, the hook and lift mechanism 40 comprises a hook 42 for hooking onto the demountable platform 30. In some embodiments, as the one illustrated in FIGS. 1 and 1A, the hook and lift mechanism 40 comprises a power lift mechanism 44 that includes an actuator 46 and a rotatable frame 48 for rotating the demountable platform into an inclined posture relative to the carrier deck. The actuator 46 may be a hydraulic actuator. Alternatively, the actuator may be pneumatic or electric. The rear wagon 10 of the offroad utility vehicle includes a vehicle-mounted roller 50 extending rearwardly behind the carrier deck. In some embodiment, the demountable platform 30 also comprises a platform roller 32 at a rear end of the demountable platform. In some embodiments, the demountable platform 30 carries cargo or equipment 32, e.g. firefighting equipment. As shown by way of example in FIG. 1A, the rotatable frame 48 comprises a first beam 52 and a second beam 54 connected to the first beam, wherein the actuator 46 of the power lift mechanism 40 connects to an underside of the first beam (e.g. connects to an anchor point 56 of the first beam 52 and wherein the second beam 54 connects to the hook 42. In some embodiments, as the one depicted in FIG. 1A, the first beam 52 and the second beam 54 are connected to each other at a right angle (i.e. the first and second beams are orthogonal) although, in a variant, the first and second beams may be connected to each other at an acute angle, i.e. an angle less than 90 degrees. When folded down, the rotatable frame 48 sits within a groove, gap or receptacle in the carrier deck. As such, the carrier deck 20 may be composed of two side-by-side parallel rails or flat members defining a gap or groove into which the rotatable frame 48 is stowed when the demountable platform 30 is mounted on the carrier deck 20.

FIG. 1B depicts the internal components of the hook and lift mechanism 40. FIG. 1B shows the rear wagon of the vehicle, the tires 12, the demountable platform 30 and the platform roller 32. In some embodiments, as the one depicted in FIG. 1B, the hook and lift mechanism 40 includes the hook 42, the actuator 46, the first beam 52 and the second beam 54. In some embodiments, as the one depicted in FIG. 1B, the second beam 54 slides inside a channel 54a. The actuator 46 in some embodiments is a hydraulic actuator having a hydraulic fitting 46a to connect to a hydraulic hose or line for receiving hydraulic pressure from the vehicle. The actuator is connected to two movable rods, linkages or shafts that are both angled relative to a linear axis of the motion of the actuator. As shown by way of example in FIG. 1B, the actuator 46 is connected to a first linkage 47 and a second linkage 49. The first linkage 47 is angled downwardly whereas the second linkage 49 is angled upwardly as shown by way of example in FIG. 1B. The first linkage 47 has a distal end, which may include a roller 47a, configured to slide or roll inside a channel 53 that is parallel to the channel 54a. The second linkage 49 has a distal end connected to a bracket 51 as shown in FIG. 1B. The bracket 51 has a lower end, which may include a roller 51a, configured to slide or roll inside the channel 53. The bracket 51 also has an upper end mounted to the distal end of the channel 54a. The channel 54a is, in some embodiments, rotatable by the actuator so the second beam 54 can slide in the channel 54a while the channel 54a rotates. In operation, the second beam 54 is configured to slide inside the channel 54a while concurrently the rollers 47a, 51a roll in the channel 53. This enables the platform 30 to move rearwardly relative to the rear wagon. In operation, the actuator 46 exerts a generally rearward force on both the first and second linkages 47, 49. The force exerted on the first linkage 47 causes the platform to move rearwardly while the force exerted on the second linkage 49 causes the platform to rotate or pivot. The actuator thus imparts both linear and rotational motion to the platform to demount the platform from the rear wagon of the vehicle. In other words, the hook and lift mechanism 40 moves the demountable platform 30 between the mounted and demounted positions by both sliding and rotating the demountable platform 30. To do so, as noted above, the hook and lift mechanism 40 uses the hook 42 to hook onto the demountable platform 30, or a crossbar thereof. The hook and lift mechanism 40 uses its power lift mechanism that includes the actuator 46 to rotate and slide the rotatable frame comprising both the first beam 52 and the second beam 54 which is orthogonal to the first beam 52. The first beam supports the hook 42 as shown by way of example in the drawings whereas the second beam 54 is configured in some embodiments to move inside the rotatable channel 54a to achieve both sliding and rotating of the demountable platform 30 into an inclined posture relative to the carrier deck 20. The actuator, in some embodiments, uses the first linkage 47 to slide the demountable platform 30 and a second linkage 49, angled relative to the first linkage 47, to concurrently rotate the demountable platform 30.

Demounting of the demountable platform may be automatic, semi-automatic or human-controlled. For example, in some embodiments, the vehicle may include a platform-demounting processor to automatically control the demounting or re-mounting of the platform. In some embodiments, the vehicle may include an environment-sensing camera for capturing image data of an environment behind the vehicle. The platform-demounting processor may be configured to process the image data to identify any objects or obstacles (e.g. rocks, roots, stumps, etc.) or any holes, ruts, depressions, etc. behind the vehicle to determine whether it is safe to demount the demountable platform from the carrier in the current location. The platform-demounting processor may generate an alert for the user of the vehicle to notify the user that the ground behind the vehicle is too uneven to demount the platform. Alternatively, in the case of an automatic demounting, the platform-demounting processor may generate and send a demount signal to the actuator 46, or to an actuator controller that controls the actuator 46, to automatically control the actuator to demount the platform 30 only in response to first processing the image data to determine that the ground behind the vehicle is sufficiently even to receive the platform 30.

In some implementations, the vehicle remains stationary while demounting the platform. Alternatively, in other implementations, the vehicle drives slowly forward while demounting the platform.

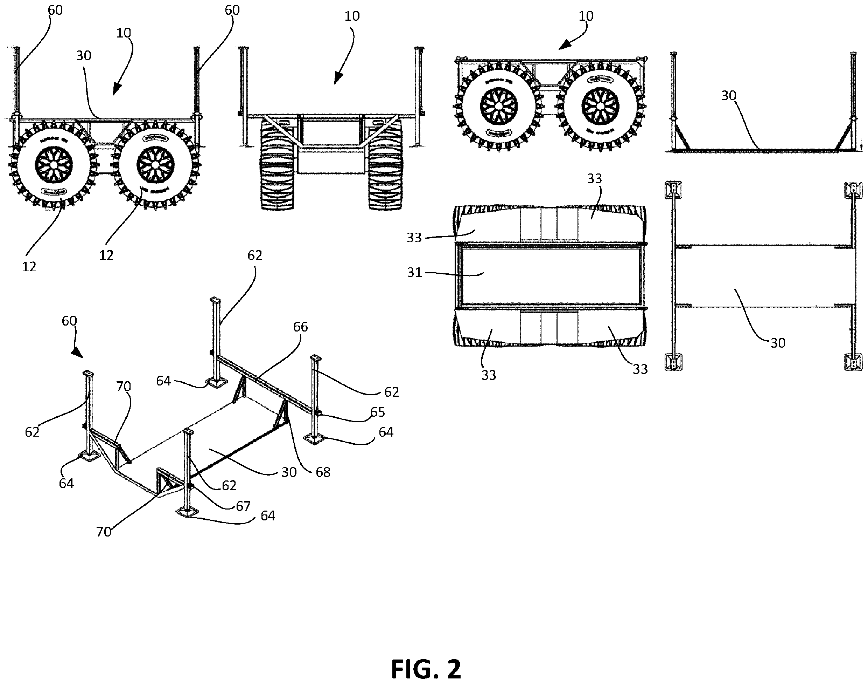

FIG. 2 depicts a rear wagon 10 of an offroad utility vehicle having a demountable platform 30 that includes a drop-leg mechanism 60 for demounting and mounting the demountable platform 30 in accordance with other embodiments of the present invention. The drop-leg mechanism 60 comprises four deployable legs 62 (i.e. extendable and retractable stabilizer legs) that extend and retract between extended (lowered) and retracted (raised) positions. In a variant, there may be a different number of legs, e.g. 6 legs, 8 legs, etc. In another variant, the platform may include any shape or type of stabilizer legs, outriggers, struts or the like to support and stabilize the platform on the ground. In some embodiments, as the one illustrated in FIG. 2, the legs include optional feet 64 to help stabilize the platform on the ground. In the extended (lowered) position, the optional feet 64 of the legs 60 engage the ground. In the retracted (raised) position, the feet 64 of the legs 62 are above the ground with sufficient ground clearance for vehicle operation over rugged terrain. In some embodiments, as the one depicted in FIG. 2, when in the retracted posture, the legs are raised higher than axles of the wheels in order to provide maximal ground clearance for driving over rough terrain. Alternatively, the drop-leg mechanism 60 may include four folding or pivoting legs that fold or pivot between deployed and retracted positions. In some embodiments, the drop-leg mechanism includes four leg actuators for the four legs in order to raise or lower the platform. For example, each leg 62 may include a respective linear actuator, e.g. a hydraulic actuator, pneumatic actuator or electric actuator to extend and retract the legs. The legs may be independently controllable by a leg controller so that each leg can be extended to a different length if necessary to deploy the platform on an uneven terrain. The vehicle, e.g. the carrier, may include a sensor, e.g. a weight sensor, to sense when the weight of the platform on the carrier has dropped to zero or to below a predetermined weight threshold, thereby indicating that the weight of the platform is now supported, or at least mainly supported, by the legs so that the vehicle may drive off. Alternatively, the sensor may be a clearance sensor to indicate that there is a minimal clearance or gap between the top of the carrier and the bottom of the platform so that the vehicle may drive off without sliding contact between the carrier and platform. In other implementations, the legs are extended by the actuators until the weight drops below a predetermined weight threshold and/or the clearance reaches a predetermined clearance threshold. The actuators can then be stopped and optionally locked in place. In another implementation, the vehicle has an adjustable suspension to provide an adjustable ride height or ground clearance. The vehicle can lower its suspension to reduce the weight of the platform on the carrier and/or to provide the minimal clearance between the platform and carrier so that the vehicle can drive off, leaving the platform in place.

As further depicted by way of example in FIG. 2, the platform 30 is rectangular and fits inside a similarly shaped and sized rectangular gap 31 between wheel wells 33 of the rear wagon of the vehicle. In some embodiments, the platform sits flush with the flat tops of the wheel wells.

In some embodiments, as illustrated in the figures, the demountable platform 30 is further vertically movable relative to the legs 62 such that the demountable platform 30 can be raised and lowered relative to the legs 62. In some embodiments, as the one depicted in FIG. 2, the drop-leg mechanism 60 includes a crossbar 66, triangular frame members 68, and triangular supports 70. In some embodiments, the crossbar 66 is at the front of the platform whereas the triangular supports 70 are at the rear of the platform. In some embodiments, the platform 30 is slidable or adjustable vertically by sliding joints 65, 67 that enable the crossbar 66 and triangular supports 70 to slide relative to the legs 62.

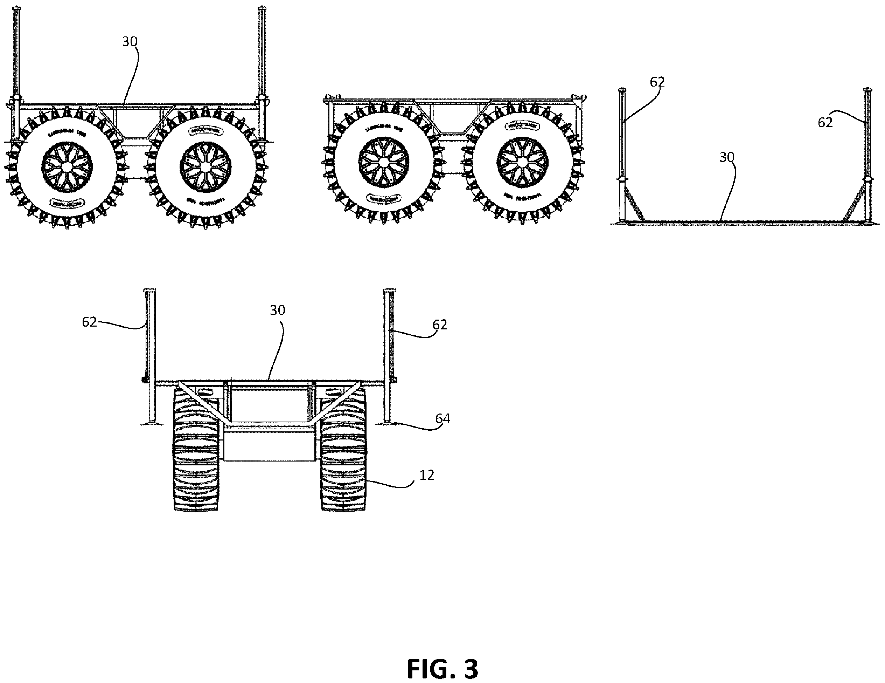

FIG. 3 further depicts the rear wagon and drop-leg mechanism of FIG. 2. In some embodiments, the feet 64 of the legs 62 are disposed below the platform when sitting on the carrier deck 20. Nevertheless, the feet 64 are disposed above the axis of rotation of the tires 12 so as to not interfere with the vehicle when traversing rugged terrain or when floating in water.

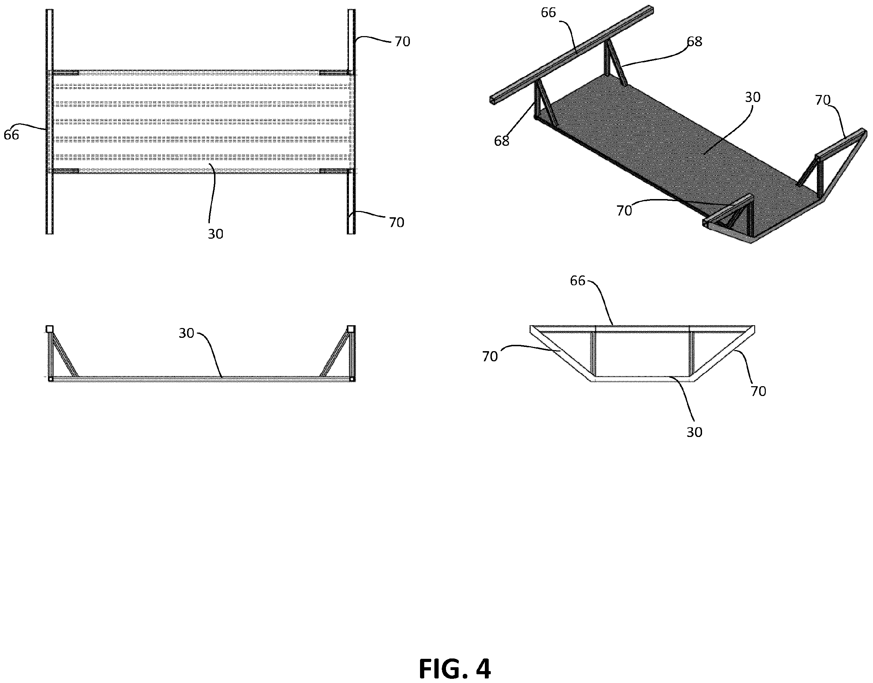

FIG. 4 depicts the demountable platform 30 for the offroad utility vehicle. The crossbar 66 is disposed at the front of the demountable platform 30 whereas the triangular supports 70 are disposed at the rear of the demountable platform 30. The hook and lift mechanism and the drop-leg mechanism may be used independently of each other or these may be combined in a hybrid mechanism that can be deployed using either mechanism. The hook 42 described with respect to the hook and lift mechanism may be used to engage the crossbar 66 to lift the platform 30. Any dimensions presented in the drawings are not meant to be limiting. Any dimensions are presented solely by way of illustration for one specific implementation.

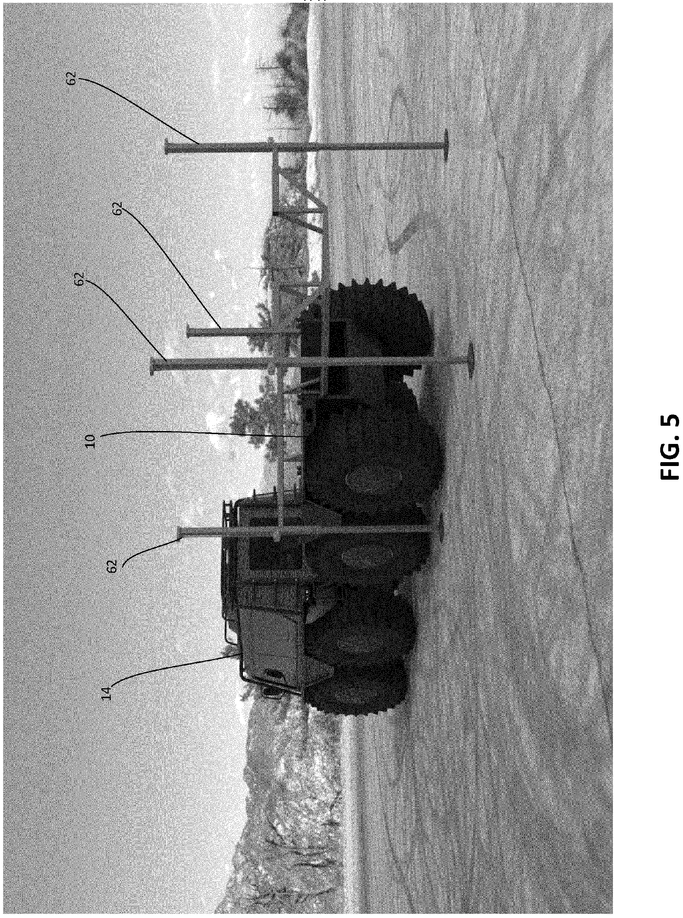

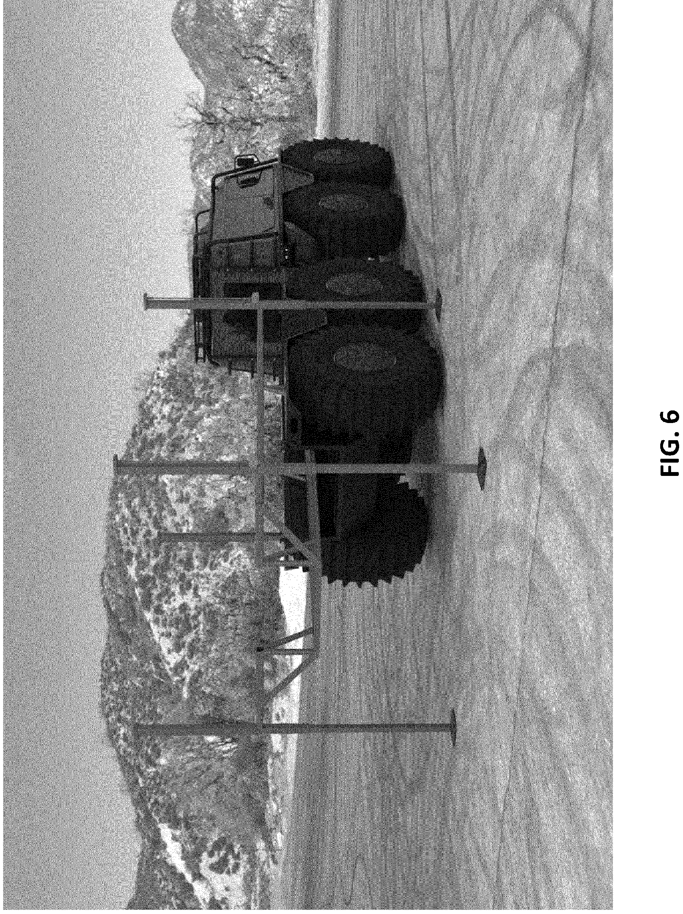

FIGS. 5-14 depict the offroad utility vehicle with a drop-leg mechanism for deploying the demountable platform 30. The offroad utility vehicle shown in FIGS. 5-8 is an 8x8 articulated vehicle having a four-wheeled main vehicle and a four-wheeled rear wagon. In some embodiments, the main vehicle comprises an internal combustion engine, e.g. a diesel engine, connected to a hydrostatic transmission for driving eight hydrostatic motors (i.e. one for each of the eight wheels of the vehicle). FIG. 5 and FIG. 6 are two rear perspective views of an offroad utility vehicle having a rear wagon and the demountable platform 30. The offroad utility vehicle in FIG. 5 and FIG. 6 is an articulated vehicle having a main vehicle unit 14 having at least four inflatable tires, a cab for housing a driver of the offroad utility vehicle, and a tow hitch. The offroad utility vehicle of FIG. 5 and FIG. 6 includes a rear wagon 10 coupled via the tow hitch to the main vehicle unit 14. The rear wagon 10 comprises the carrier deck 20. The rear wagon 10 also has at least four inflatable tires. The inflatable tires of the main vehicle and rear wagon are of sufficient volume to provide buoyancy for the vehicle, i.e. to enable the offroad utility vehicle to float on water. In other words, each tire has a volume V that provides a buoyant force F_{B}. The total buoyant force generated by the four tires is thus 4F_{B}. The total buoyant force 4F_{B} is greater than or equal to the weight Wv of the vehicle. To account for payload P, the total buoyant force 4F_{B} should be greater than or equal to Wv + P. For an 8x8 vehicle, i.e. a vehicle with a main vehicle having four tires and a rear wagon having four tires, the total buoyant force 8F_{B} is greater than or equal to the weight Wv of the vehicle and the payload P. In some embodiments, the vehicle is therefore amphibious, i.e. capable of travelling over land or water. As such, the vehicle is well suited to traversing all types of terrain including swamps, bogs, marshland, wetlands, snow, ice, and combinations thereof. In other embodiments, the offroad utility vehicle may be tracked. In other embodiments, the offroad utility vehicle may have a different number of wheels/tires. For example, the offroad utility vehicle may be a four-wheeled vehicle, a six-wheeled vehicle, an eightwheeled vehicle, etc. The offroad utility vehicle may have an internal combustion engine (i.e. it can be a gas-powered vehicle). Alternatively, it can be an electrically powered vehicle having an electric motor and battery. Alternatively, it can be a hybrid powered vehicle having both an internal combustion engine and an electric motor. In other embodiments, the offroad utility vehicle is a non-articulated vehicle, i.e. a vehicle having a single rigid chassis. The carrier deck 20 may be disposed on a rear portion of the offroad utility vehicle. In other embodiments, the offroad utility vehicle has a carrier deck 20 on a front portion of the offroad utility vehicle. In other embodiments, the offroad utility vehicle has multiple carrier decks 20. For example, the offroad utility vehicle can have a front carrier deck and a rear carrier deck.

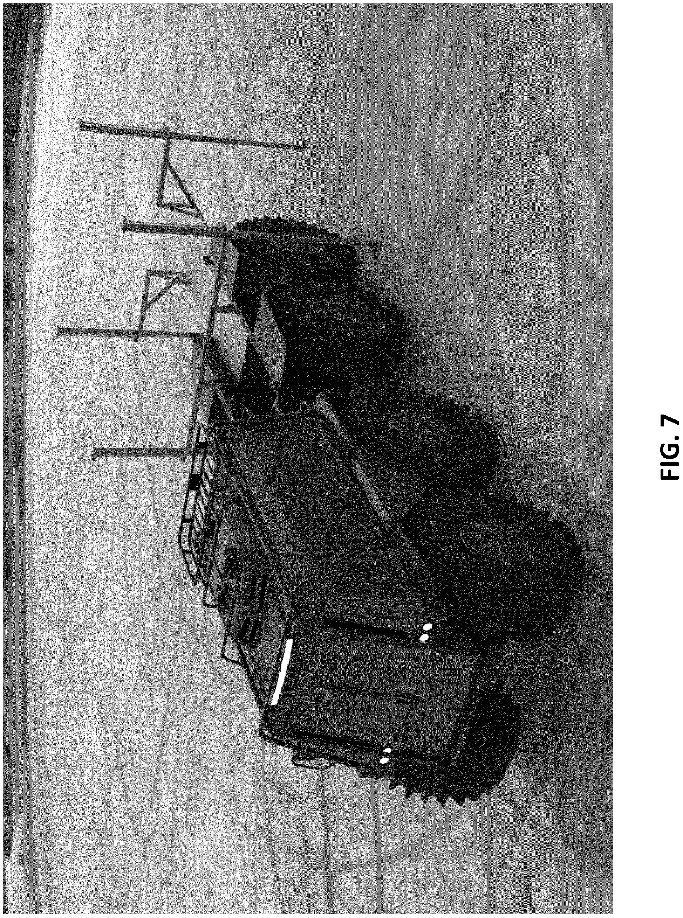

FIG. 7 is a front perspective view of the offroad utility vehicle and the demountable platform 30. The offroad utility vehicle may be human-driven vehicle or an autonomous (self-driving) vehicle. The offroad utility vehicle may, alternatively, be a semi-autonomous vehicle, i.e. a vehicle having a mixed human-autonomous driving capability. Demounting of the demountable platform may be automatic, semi-automatic or human-controlled. For example, in some embodiments, the vehicle may include a platform-demounting processor to automatically control the demounting or re-mounting of the platform. In some embodiments, the vehicle may include an environment-sensing camera for capturing image data of an environment below the vehicle. The platform-demounting processor may be configured to process the image data to identify any objects or obstacles (e.g. rocks, roots, stumps, etc.) or any holes etc. below the vehicle to determine whether it is safe to demount the demountable platform from the carrier in the current location. The platform-demounting processor may generate an alert for the user of the vehicle to notify the user that the ground beneath the vehicle is too uneven to demount the platform. Alternatively, in the case of automatic demounting, the processor may generate and send a demount signal to a leg actuator controller to automatically deploy the legs to demount the platform only in response to first processing the image data to determine that the ground below the vehicle is sufficiently even to receive the platform.

In some optional implementations, the demountable platform 30 comprises a self-leveling mechanism. The self-leveling mechanism includes a platform inclination sensor for sensing an inclination of the platform, a platform self-leveling controller for receiving an inclination signal representing the inclination of the platform and leg adjustment actuators for adjusting a length (extension) of the legs to level the platform. This is useful for deploying the platform on uneven terrain. This is also useful to keep the platform level if the platform shifts or sags on soft terrain under the weight of the cargo or equipment it is carrying. Optionally, the platform 30 may include a transceiver to send a relocation beacon, signal or message requesting the platform be moved to a different location if the angle of inclination exceeds a safe angular threshold. The platform may incline over time if, for example, the ground on which the platform was placed has softened, eroded or washed out due to rain. Alternatively, this may occur if the platform is placed on frozen ground and the ground melts. The platform may include a battery to power the transceiver. The platform self-leveling controller and the platform-demounting processor may optionally be communicatively coupled in some embodiments so that self-leveling can be performed while demounting the platform onto the ground.

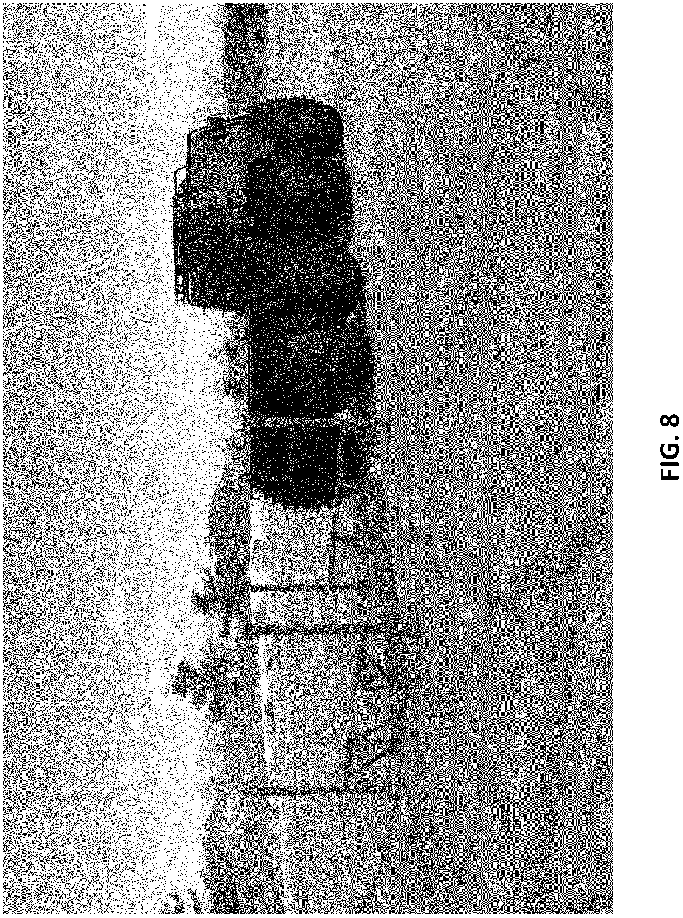

FIG. 8 is a rear perspective view of the offroad utility vehicle 14 after deployment of the demountable platform 30. In the example of FIG. 8, the demountable platform 30 is shown deployed on the ground. Once the demountable platform 30 is deployed on the ground, the vehicle may drive away to return to base, e.g. to pick up and deploy another platform. The demountable platform 30 may optionally have floats or flotation devices for being deployed on water. The demountable platform 30 may optionally emit a location beacon for finding and retrieving the demountable platform 30. For example, the demountable platform 30 may include a GNSS chip and a satellite transceiver for transmitting location coordinates.

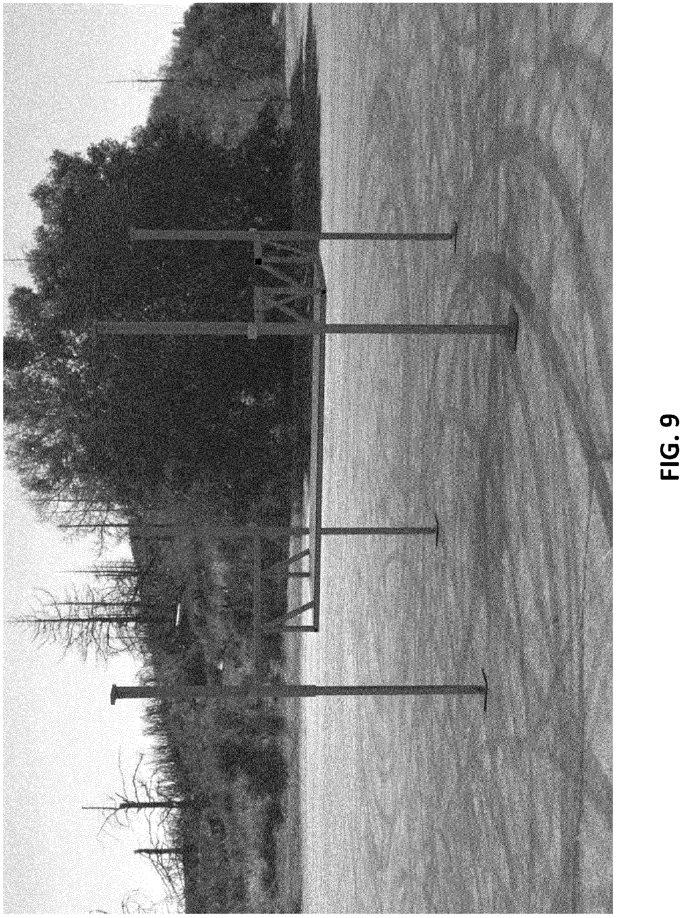

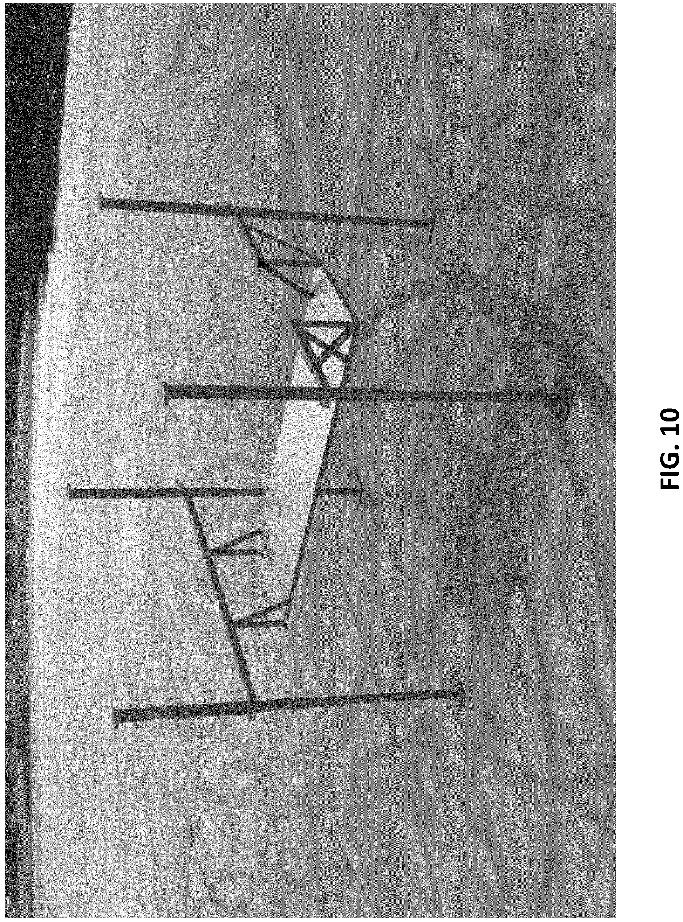

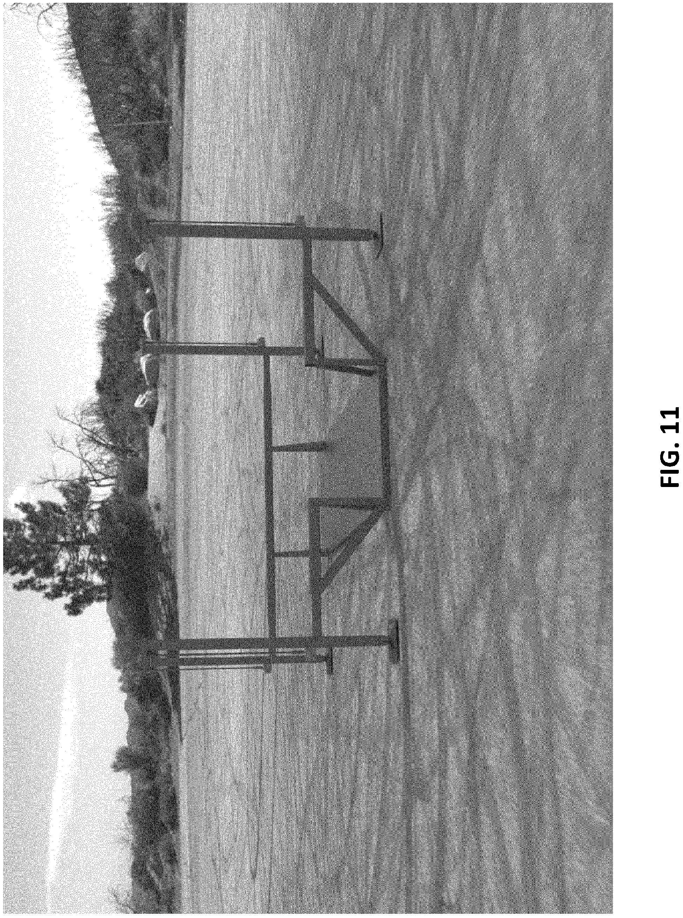

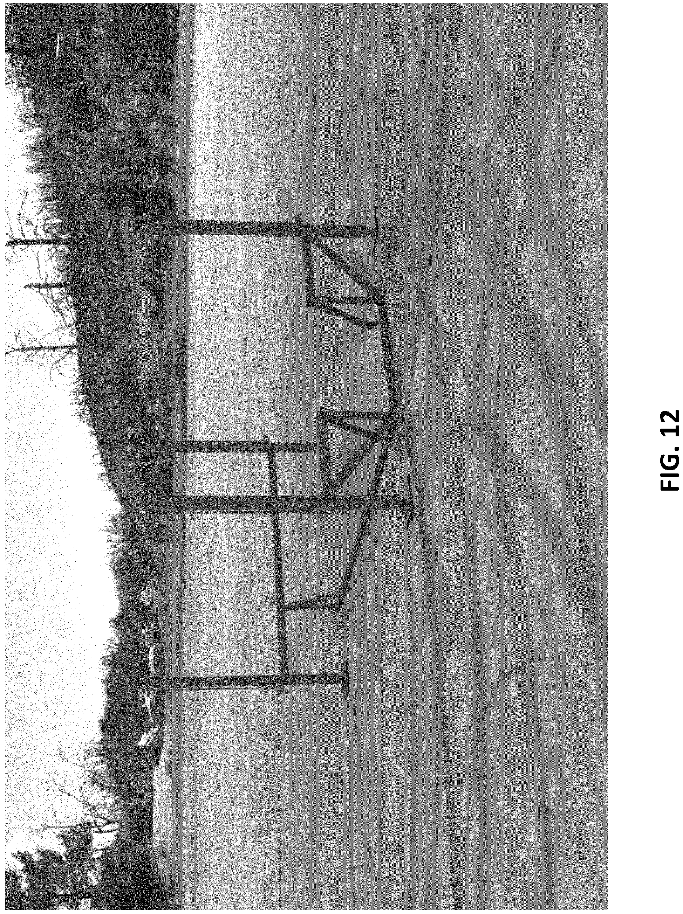

FIG. 9 and FIG. 10 are perspective views of the demountable platform 30 in an elevated posture. To deploy (demount) the demountable platform 30 from the vehicle, the legs 62 are deployed (i.e. the legs are extended downwardly until they reach the ground). Once the demountable platform 30 has cleared the carrier deck 20 or at least once the weight of the demountable platform 30 is off the carrier deck 20, the vehicle can drive forward, leaving the demountable platform 30 standing on its legs 62. The demountable platform 30 can be vertically raised or lowered by sliding the platform's slidable joints 65, 67 relative to the legs 62. In some embodiments, the demountable platform 30 is manually vertically adjustable using a hand crank mechanism (not shown) to lift or lower the demountable platform. Actuators may be provided in an alternative implementation to provide a power lift for the demountable platform 30. FIG. 11 and FIG. 12 are perspective views of the demountable platform 30 in a lowered posture. Once the demountable platform has been lowered, the equipment carried on the demountable platform can be used or offloaded more easily. However, in some instances, it may be desired to leave the demountable platform elevated. The power lift may include actuators in or connected to the legs. The power lift may alternatively include another type of mechanism such as, for example, a scissor lift mechanism, screw lift mechanism, bottle jack, etc. Alternatively, the lift mechanism may be manually driven, e.g. driven by a hand crank mechanism or a pumping lever.

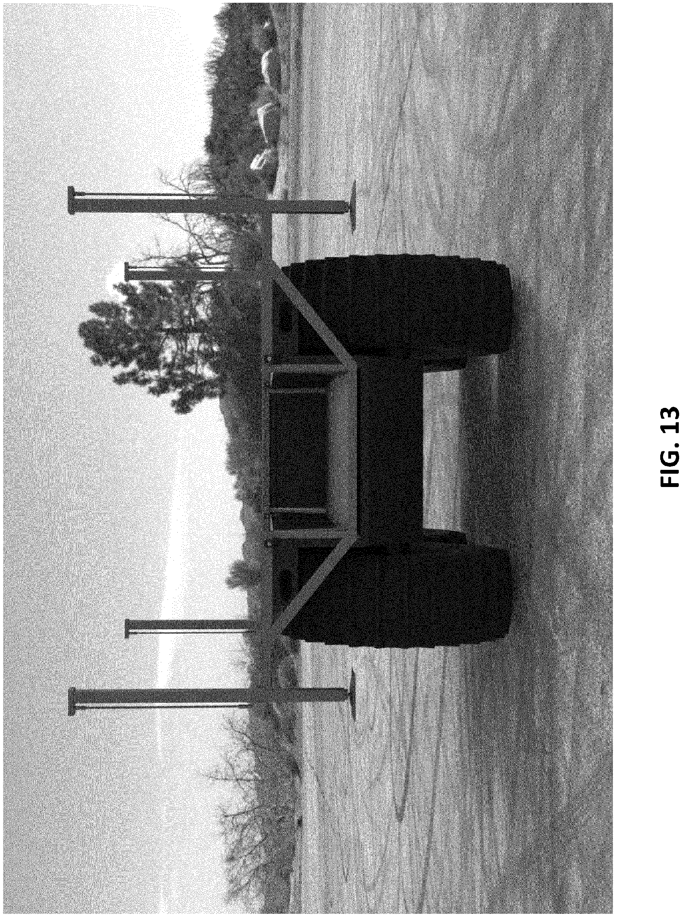

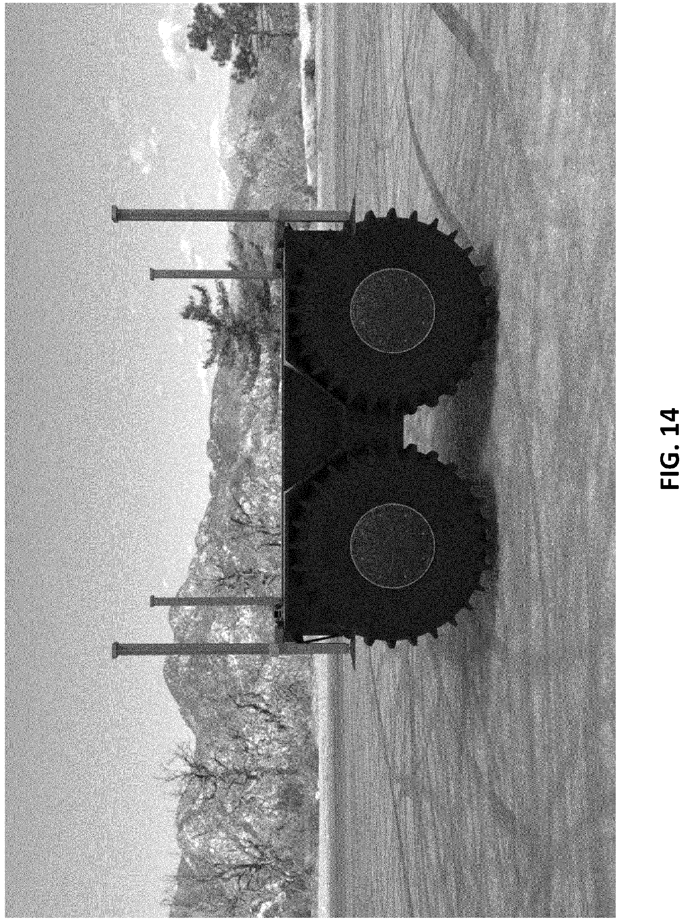

FIG. 13 and FIG. 14 are rear and side views of the demountable platform 30 being carried by the rear wagon of the offroad utility vehicle. It will be appreciated that the size, dimensions and proportions of the rear wagon and/or of the demountable platform may be varied. For example, the demountable platform 30 is shown to be approximately the same length as the carrier deck 20; however, in another implementation, the demountable platform 30 may be longer or shorter than the carrier deck 20.

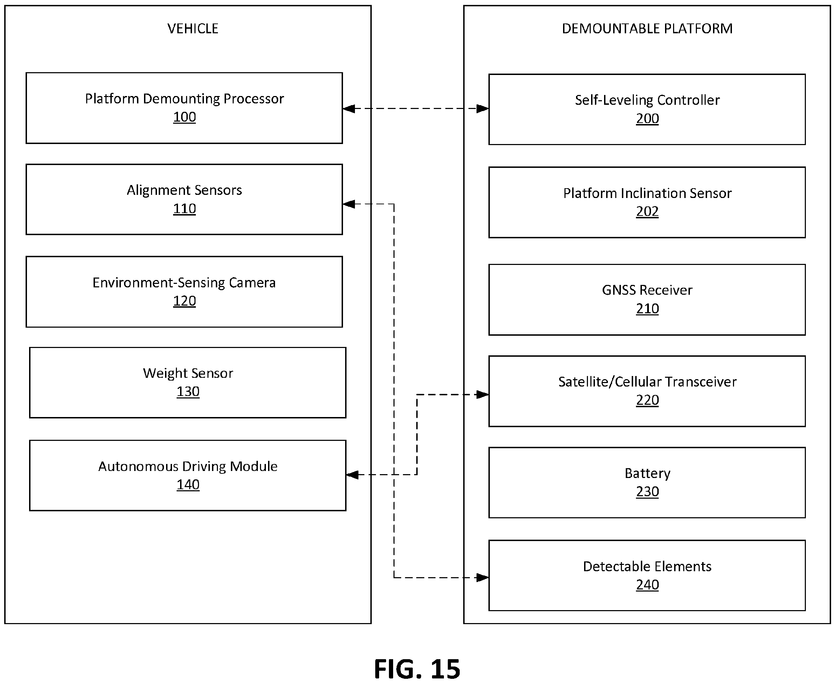

FIG. 15 schematically depicts various electronic modules, e.g. hardware, firmware and/or software modules, that may be incorporated into the vehicle and/or demountable platform in order to implement the features and functions described herein. As depicted by way of example in FIG. 15, the vehicle may optionally include a platform-demounting processor 100 to automatically or semi-automatically control the demounting of the demountable platform 30 and/or the remounting of the demountable platform 30. The vehicle may optionally include one or more alignment sensors 110 to detect or sense the legs of the platform to facilitate backing the rear wagon between the legs of the platform. In some implementations, the vehicle and/or demountable platform include the one or more alignment sensors 110 to facilitate re-mounting the demountable platform 30 onto the rear wagon of the offroad utility vehicle. In some embodiments, the alignment sensors 110 are disposed on the vehicle, e.g. on the rear wagon. To re-mount the platform, the offroad utility vehicle must be backed up (driven in reverse) such that the rear wagon of the vehicle fits between the legs of the platform. Once the platform is aligned with the rear wagon of the vehicle, the legs can be raised. In some embodiments, the offroad utility vehicle includes one or more rear sensors to detect the legs of the platform. The one or more rear sensors may include one or more cameras or optical sensors, one or more ultrasound or SONAR sensors, one or more magnetic sensors, or any combination thereof. The legs may be made easier to detect by including one or more reflectors, RF tags, light emitters, magnets or another detectable elements 240 to enable the one or more sensors to more easily detect the legs and thus to determine the positions of the legs relative to the vehicle. The vehicle may include an alignment processor that functions as a backup assistant to assist the driver (user) of the vehicle in backing up the vehicle between the legs of the platform. In another implementation, the vehicle may be autonomous and the alignment of the vehicle with the legs of the platform may be done autonomously. Optionally, the vehicle can sense the height of the platform to ensure that is sufficiently high to be remounted onto the rear wagon of the vehicle. As further depicted by way of example in FIG. 15, the vehicle may include an environment-sensing camera 120 to sense the ground onto which the platform is to be deployed. The vehicle optionally may include a weight sensor 130 for detecting a weight of the platform and any payload on the carrier deck. In some embodiments, the weight sensor enables the vehicle to determine when the legs of the platform are now supporting the platform and its payload so that the vehicle can safely drive away from the platform. The vehicle may optionally include an autonomous driving module 140. This autonomous driving module 140 may include various sensors such as cameras, LIDAR, RADAR, etc. to sense the environment and a self-driving or autonomous processor for receiving sensor data and for driving autonomously along a route to a designation by avoiding collisions with obstacles or unpassable terrain. In one implementation, the platform sends its location coordinates to the vehicle over the air via satellite or cellular link. The autonomous vehicle uses the autonomous driving module 140 to set the location coordinates of the platform as the target destination. The autonomous vehicle then navigates on its own to the platform.

As further depicted by way of example in FIG. 15, the demountable platform 30 may optionally include various components and/or modules such as a platform self-leveling controller 200 for controlling self-leveling of the platform and a platform inclination sensor 202 for sensing an angle of inclination of the platform and for providing the inclination to the self-leveling controller 200. The platform may optionally include a GNSS receiver 210, e.g. a GPS receiver, for generating location coordinates. The platform may optionally include a satellite and/or cellular transceiver 220 for communicating with the vehicle and/or with a remote station, base, headquarters, etc. For example, the transceiver 220 may transmit the location of the platform. The platform may optionally include a battery 230 to provide electric power to the various components/modules. The demountable platform may optionally include the one or more detectable elements 240 mentioned above. These elements can be tags or other devices that are easily sensed by the alignment sensors 110 to facilitate alignment of the rear wagon with the platform.

The offroad utility vehicle can be used for various applications such as firefighting for forest fires, military operations, disaster relief, infrastructure maintenance or construction.

For example, in some embodiments, the demountable platform comprises firefighting equipment. The firefighting equipment may include an engine, pump and a first hose connected to an inlet of the pump to draw water from a nearby lake, pond, river, stream, etc. and a second hose connected to an outlet of the pump to deliver the water through a nozzle to fight a fire.

In other embodiments, the demountable platform comprises a battery, engine or generator for powering electrical any other industrial equipment.

In other embodiments, the demountable platform comprises an office pod. The office pod may have a window, a door, a workstation/desk and a power supply. The office pod may include a satellite communication transceiver for satellite telecommunications. In yet other embodiments, the demountable platform comprises a drone platform. The drone platform may have one or more drone-recharging pads. In yet further embodiments, the demountable platform comprises water filtration or water desalination equipment. The water filtration or water desalination equipment may include an engine, pump and hose.

Various military applications are also contemplated. For example, the demountable platform may comprise an air defense system or component thereof like a radar receiver, antenna mast, a surface-to-air missile (SAM) launcher, electronic warfare equipment, surveillance equipment, etc. The demountable platform may be used, in other embodiments, to carry a command center or command post. The offroad utility vehicle can be used to deploy military equipment in remote areas that are not serviced by roads. The offroad utility vehicle can travel across rugged terrain and/or traverse bodies of water, etc. to then demount the demountable platform at the desired remote location. The offroad utility vehicle can also retrieve platforms by lifting them back onto the carrier deck to be returned to base or redeployed as needed.

Any method steps or modules disclosed herein may be implemented as software, i.e. as coded instructions stored on a computer readable medium which performs the foregoing steps when the computer readable medium is loaded into memory and executed by the microprocessor of the computing device. A computer readable medium can be any means that contain, store, communicate, propagate or transport the program for use by or in connection with the instruction execution system, apparatus or device. The computer-readable medium may be electronic, magnetic, optical, electromagnetic, infrared or any semiconductor system or device. For example, computer executable code to perform the methods disclosed herein may be tangibly recorded on a computer-readable medium including, but not limited to, a floppy-disk, a CD-ROM, a DVD, RAM, ROM, EPROM, Flash Memory or any suitable memory card, etc. The method may also be implemented in hardware. A hardware implementation might employ discrete logic circuits having logic gates for implementing logic functions on data signals, an application-specific integrated circuit (ASIC) having appropriate combinational logic gates, a programmable gate array (PGA), a field programmable gate array (FPGA), etc.

For the purposes of this specification, the expression "module" is used expansively to mean any software, hardware, firmware, or combination thereof that performs a particular task, operation, function or a plurality of related tasks, operations or functions. When used in the context of software, the module may be a complete (standalone) piece of software, a software component, or a part of software having one or more routines or a subset of code that performs a discrete task, operation or function or a plurality or related tasks, operations or functions. Software modules have program code (machine-readable code) that may be stored in one or more memories on one or more discrete computing devices. The software modules may be executed by the same processor or by discrete processors of the same or different computing devices.

Computer readable program instructions can be downloaded to respective computing devices from a computer readable storage medium or to an external computer or external storage device via a data network, for example, the Internet, a local area network, a wide area network or a wireless network. The network may comprise copper transmission cables, optical transmission fibers, wireless transmission, routers, firewalls, switches, gateway computers and/or edge servers. A network adapter card or network interface controller (NIC) in each computing device receives computer readable program instructions from the network and transmits the computer readable program instructions for storage in a computer readable storage medium within the respective computing device.

Computer readable program instructions are computer-executable instructions in machine-readable code for carrying out operations of the present invention and may be assembler instructions, instruction-set-architecture (ISA) instructions, machine instructions, microcode, firmware instructions, state-setting data, configuration data for integrated circuitry, or either source code or object code written in any combination of one or more programming languages, including an object oriented programming language and procedural programming languages. The computer-executable instructions executed by a computing device carry out program processes such as routines, programs, objects, components, logic, data structures that perform particular tasks or implement particular abstract data types.

Various aspects of the invention are described with reference to flowcharts and/or block diagrams of methods, systems, and computer program products. Each block of the flowcharts and/or block diagrams, and combinations of blocks in the flowchart illustrations and/or block diagrams, can be implemented by computer readable program instructions. These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified by a block of the flowchart and/or block diagram.

The computer readable program instructions may also be loaded onto a computer, other programmable data processing apparatus, or other device to cause a series of operational steps to be performed on the computer, other programmable apparatus or other device to produce a computer implemented process or computer-implemented method, such that the instructions which execute on the computer, other programmable apparatus, or other device implement the functions/acts specified in the flowchart and/or block diagram.

The flowchart and block diagrams in the figures illustrate the architecture, functionality, and operation of possible implementations of systems, methods, and computer program products according to various embodiments of the present invention. Each block in the flowchart or block diagrams may represent a module, segment, or portion of instructions, which comprises one or more executable instructions for implementing the specified function. In some alternative implementations, the functions noted in the blocks may occur out of the order shown in the Figures. For example, two blocks shown in succession may be executed substantially concurrently, or the blocks may sometimes be executed in the reverse order, depending upon the functionality involved. Each block of the block diagrams and/or flowcharts, and combinations of these blocks, can be implemented by special purpose hardware-based systems that perform the specified functions or acts or carry out combinations of special purpose hardware and computer instructions.

It is to be understood that the singular forms "a", "an" and "the" include plural referents unless the context clearly dictates otherwise. Thus, for example, reference to "a device" includes reference to one or more of such devices, i.e. that there is at least one device. The terms "comprising", "having", "including", "entailing" and "containing", or verb tense variants thereof, are to be construed as open-ended terms (i.e., meaning "including, but not limited to,") unless otherwise noted. All methods described herein can be performed in any suitable order unless otherwise indicated herein or otherwise clearly contradicted by context. The use of examples or exemplary language (e.g. "such as") is intended merely to better illustrate or describe embodiments of the invention and is not intended to limit the scope of the invention unless otherwise claimed.

While several embodiments have been provided in the present disclosure, it should be understood that the disclosed systems and methods might be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the inventive concept(s) disclosed herein.

## Claims

1. An offroad utility vehicle (10, 14) comprising:
a carrier deck (20);
a demountable platform (30) that is movable between a mounted position in which the demountable platform is carried by the carrier deck (20) and a demounted position in which the demountable platform (30) is deployed onto the ground; and
a hook and lift mechanism (40) for moving the demountable platform (30) between the mounted and demounted positions, wherein the hook and lift mechanism (40) comprises a hook (42) for hooking onto the demountable platform (30), wherein the hook and lift mechanism (40) comprises a power lift mechanism that includes an actuator (46) and a rotatable frame comprising a first beam (52) and a second beam (54) orthogonal to the first beam (52), the first beam supporting the hook (42), the second beam (54) configured to move inside a rotatable channel for both sliding and rotating the demountable platform (30) into an inclined posture relative to the carrier deck (20).

2. The offroad utility vehicle (10, 14) of claim 1 comprising a vehicle-mounted roller (50) extending rearwardly behind the carrier deck (20) and wherein the demountable platform (30) also comprises a platform roller (32) at a rear end of the demountable platform (30).

3. The offroad utility vehicle (10, 14) of claim 1 comprising a first linkage (47) connected to the actuator (46) to slide the demountable platform (30) and a second linkage (49), angled relative to the first linkage (47), to currently rotate the demountable platform (30).

4. The offroad utility vehicle (10, 14) of claim 1 comprising:
a main vehicle unit (14) having at least four inflatable tires (12); and
a rear wagon (10) coupled to the main vehicle unit (14), wherein the rear wagon (10) comprises the carrier deck (20) and wherein the rear wagon (10) also has at least four inflatable tires (12), the inflatable tires (12) of the main vehicle (14) and rear wagon (10) being of sufficient volume to enable the offroad utility vehicle (10, 14) to float on water.

5. An offroad utility vehicle (10, 14) comprising:
a carrier deck (20);
a demountable platform (30) that is movable between a mounted position in which the demountable platform (30) is carried by the carrier deck (20) and a demounted position in which the demountable platform (30) is deployed onto the ground; and
a drop-leg mechanism connected to the demountable platform (30), wherein the demountable platform (30) comprises a plurality of legs (62) that are movable between a raised position in which the legs (62) are raised above the ground and a lowered position in which the legs (62) are lowered onto the ground.

6. The offroad utility vehicle (10, 14) of claim 5 comprising a platform self-leveling controller (200) for controlling self-leveling of the demountable platform (30) and a platform inclination sensor (202) for sensing an angle of inclination of the demountable platform (30) and for providing the inclination to the platform self-leveling controller (200).

7. The offroad utility vehicle (10, 14) of claim 5 comprising a GNSS receiver (210) for generating location coordinates of the demountable platform (30) and a satellite and/or cellular transceiver (220) for transmitting the location coordinates of the demountable platform (30).

8. The offroad utility vehicle (10, 14) of claim 5 comprising:
a main vehicle unit (14) having at least four inflatable tires (12); and
a rear wagon (10) coupled to the main vehicle unit (14), wherein the rear wagon (10) comprises the carrier deck (20) and wherein the rear wagon (10) also has at least four inflatable tires (12), the inflatable tires (12) of the main vehicle (14) and rear wagon (10) being of sufficient volume to enable the offroad utility vehicle (10, 14) to float on water.
